# FASCICULE DE BREVET EUROPEEN

(11) **EP 3 854 653 B1**
(45) Date de publication et mention de la délivrance du brevet: **10.04.2024**
(21) Numéro de dépôt: 21152468.1
(22) Date de dépôt: 20.01.2021
(51) Int. Cl.: B61D 25/00, B60J 3/04, B60J 1/10, B61D 27/00

(54) **SYSTÈME DE FENÊTRE AVEC VITRAGE À OPACITÉ VARIABLE**
FENSTERSYSTEM MIT VERGLASUNG MIT VARIABLER BLICKDICHTE
WINDOW SYSTEM WITH GLASS PANEL WITH VARIABLE OPACITY

(30) Priorité: 22.01.2020 FR 2000597
(43) Date de publication de la demande: 28.07.2021
(73) Titulaire: SpeedInnov, 75008 Paris (FR)
(72) Inventeur: BEAUSEIGNEUR, Christophe, 17540 VERINES (FR); MARTIN, David Jerome, 17220 SAINTE SOULLE (FR)
(74) Mandataire: Lavoix

(56) Documents cités:
- EP-B1- 3 626 572
- CN-A- 108 790 671
- FR-A- 950 925
- GB-A- 730 723
- US-A1- 2005 007 505
- US-B1- 6 416 116

## Description

La présente invention concerne une installation comprenant une paroi équipée d'un système de fenêtre, ledit système comportant : une fenêtre propre à être disposée dans la paroi, ladite fenêtre étant délimitée par des bords supérieur et inférieur sensiblement horizontaux et disposés l'un au-dessus de l'autre, la fenêtre étant pourvue d'un vitrage à opacité variable ; et un dispositif de commande de vitrage à opacité variable associé à la fenêtre, ledit dispositif de commande comprenant un boîtier de commande.

Un tel système de fenêtre, adapté à un véhicule ferroviaire, est par exemple connu de la demande de brevet FR 18 58433, au nom de la Demanderesse. Le document US6416116 décrit également une installation comprenant une paroi équipée d'un système de fenêtre et d'une bouche de ventilation.

Afin de protéger les passagers du véhicule contre les rayons du soleil, il est connu de munir les fenêtres de vitrages à opacité variable. De tels vitrages permettent de remplacer des panneaux d'occultation mécaniques tels que des stores déroulables.

US 2005/007505 décrit un système de vitrage électro-optique avec des modes d'opération transparent ou réfléchissant.

Cependant, les vitrages à opacité variable sont associés à une électronique de contrôle qui doit être intégrée dans l'environnement du véhicule. Cette intégration est associée à des contraintes d'espace disponible, d'accessibilité et d'esthétique.

La présente invention a pour but de résoudre ces problèmes, ainsi que de permettre d'intégrer des fenêtres à opacité variable à des véhicules existants.

A cet effet, l'invention a pour objet une installation du type précité, conforme aux caractéristiques de la revendication 1.

Le boîtier de commande peut ainsi être disposé à un emplacement occupé par un enrouleur de store dans des voitures de véhicule ferroviaire non équipées de vitrages à opacité variable.

Suivant d'autres aspects avantageux de l'invention, l'installation comporte l'une ou plusieurs des caractéristiques suivantes, prises isolément ou suivant toutes les combinaisons techniquement possibles :
- le boîtier de commande présente une forme allongée ;
- la bouche de ventilation est propre à être montée mobile en rotation par rapport à la paroi, entre la première configuration et une deuxième configuration, ladite deuxième configuration donnant accès à l'espace recevant le boîtier de commande.

L'invention se rapporte en outre à un système de fenêtres conforme aux caractéristiques de la revendication 4.

L'invention se rapporte en outre à une voiture de véhicule, notamment ferroviaire, conforme aux caractéristiques de la revendication 5.

Suivant un aspect avantageux de l'invention, chaque paroi latérale comprend une pluralité de systèmes de fenêtre tels que décrits ci-dessus, chaque fenêtre étant disposée dans la paroi latérale, chaque dispositif de commande comprenant un boîtier de commande, chaque boîtier de commande présentant une forme allongée et étant fixé à la paroi latérale au-dessus du bord supérieur de la fenêtre associée, une longueur dudit boîtier de commande étant disposée sensiblement parallèlement audit bord supérieur.

L'invention se rapporte en outre à un véhicule, notamment ferroviaire, comprenant une pluralité de voitures telles que décrites ci-dessus.

L'invention se rapporte en outre à la réalisation d'une voiture de véhicule telle que décrite ci-dessus, le procédé étant conforme aux caractéristiques de la revendication 8.

L'invention sera mieux comprise à la lecture de la description qui va suivre, donnée uniquement à titre d'exemple non limitatif et faite en se référant aux dessins sur lesquels :
[Fig 1] la figure 1 est une vue partielle schématique d'une paroi latérale, notamment d'une voiture de véhicule ferroviaire, selon un mode de réalisation de l'invention ; et
[Fig 2] la figure 2 est une vue de détail, en coupe, de la paroi de la figure 1.

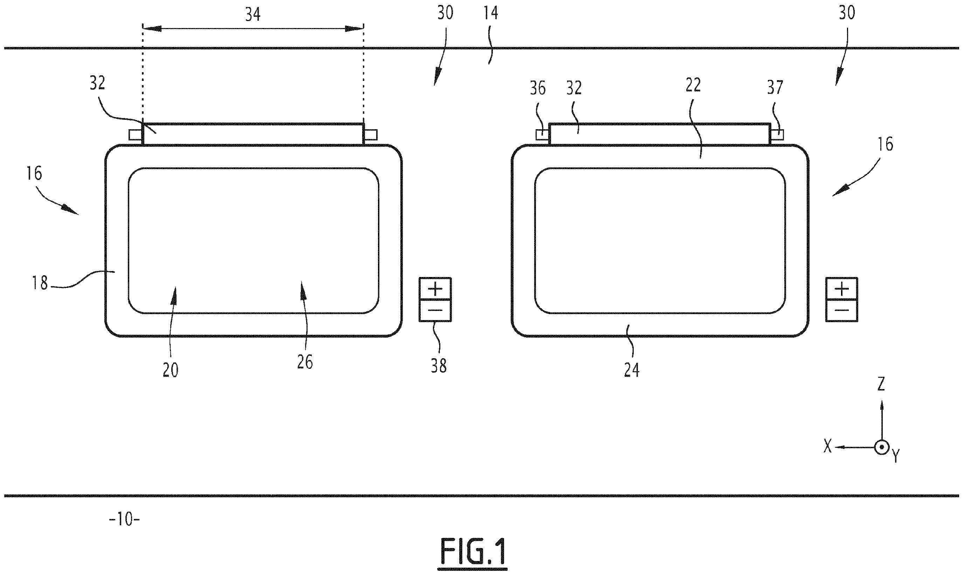

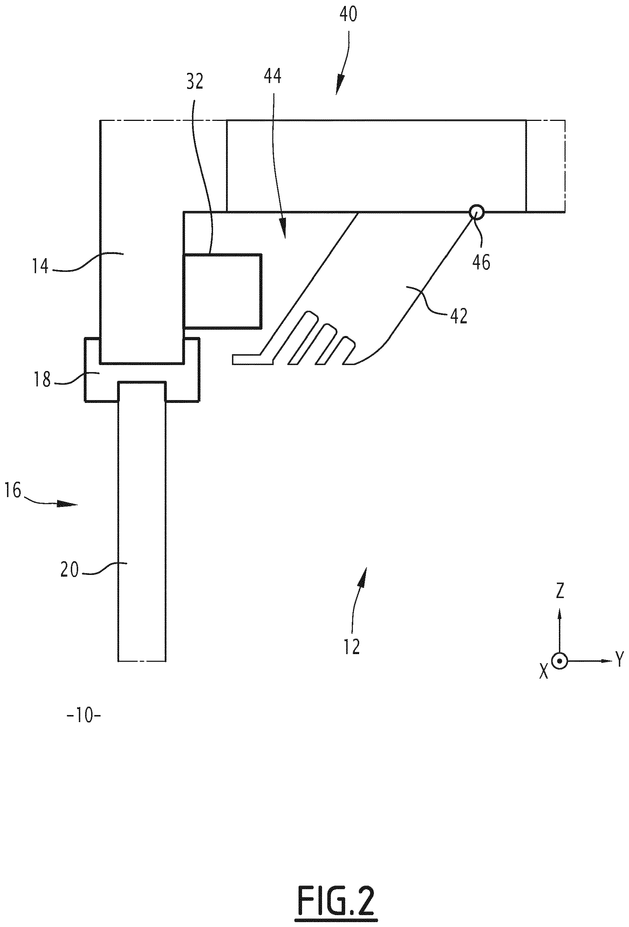

Les figures 1 et 2 montrent une paroi et notamment une paroi latérale 14 d'une voiture 10 de véhicule ferroviaire. Ladite voiture est notamment destinée à être assemblée à une ou plusieurs voitures similaires pour former le véhicule ferroviaire. En particulier, la voiture 10 est destinée à recevoir des passagers.

On considère une base orthonormée (X, Y, Z) associée à la voiture 10, Z représentant la verticale et X une direction de déplacement de la voiture 10.

La voiture 10 comporte des parois définissant un espace interne 12. En particulier, la voiture 10 comporte la paroi latérale 14 représentée sur les figures 1 et 2. La paroi latérale 14 s'étend sensiblement dans un plan (X, Z). De préférence, la voiture 10 comporte une autre paroi latérale sensiblement identique, qui fait face à la paroi latérale 14 de l'autre côté de l'espace interne 12.

La paroi latérale 14 comporte une pluralité d'ouvertures et la voiture 10 comporte une pluralité de systèmes de fenêtre, chaque système de fenêtre équipant l'une desdites ouvertures de la paroi latérale. Deux systèmes de fenêtre sont représentées sur la figure 1. Dans la suite de la description, un seul système de fenêtre sera décrite en détail, les autres systèmes de fenêtre étant considérées comme sensiblement identiques.

Le système de fenêtre comprend une fenêtre 16 comportant un châssis 18 et un vitrage 20.

Le châssis 18 est fixé à la paroi latérale 14 et entoure le vitrage 20. Le châssis 18 comporte notamment un bord supérieur 22 et un bord inférieur 24 disposés l'un au-dessus de l'autre, chacun desdits bords s'étendant sensiblement selon X. De préférence, le châssis 18 a une forme sensiblement rectangulaire.

Le vitrage 20 comporte au moins une zone 26 à opacité variable. De manière connue, la zone 26 à opacité variable comporte des particules suspendues d'opacification. L'opacité de la zone 26 dépend de l'orientation de ces particules d'opacification, cette orientation variant en fonction d'un courant électrique fourni à ladite zone 26. Plus ce courant électrique est fort, plus l'opacité de la zone 26 correspondante est faible.

Le système de fenêtre comprend en outre un dispositif 30 de commande de vitrage à opacité variable associé à la fenêtre 16 correspondante.

Chaque dispositif de commande 30 comprend un boîtier de commande 32, renfermant des composants électriques et/ou électroniques du dispositif de commande 30 correspondant.

Le boîtier de commande 32 présente une forme allongée selon X, par exemple une forme parallélépipédique. Plus précisément, des dimensions selon Y et Z du boîtier 32 sont de préférence inférieures à 20%, plus préférentiellement inférieures à 10%, d'une longueur 34 du boîtier 32 selon X.

Le boîtier de commande 32 est fixé à la paroi latérale 14 au-dessus du bord supérieur 22 de la fenêtre 16 associée. La longueur 34 dudit boîtier est disposée sensiblement parallèlement audit bord supérieur 22.

Plus particulièrement, le boîtier de commande 32 est disposé à un emplacement occupé par un enrouleur de store dans des voitures de véhicule ferroviaire non équipées de vitrages à opacité variable. Une telle disposition permet de conserver une disposition existante de voitures ferroviaires tout en l'adaptant au vitrage à opacité variable.

De préférence, chaque dispositif de commande 30 comprend une première 36 et une deuxième 37 connexions électriques, disposées à chaque extrémité selon X du boîtier de commande 32. Par l'intermédiaire de câbles (non représentés) passant à l'intérieur de la paroi latérale 14, ces connexions électriques 36, 37 permettent notamment de relier électriquement et/ou électroniquement les uns aux autres les dispositifs de commande 30 associés à des fenêtres 16 voisines.

De préférence, chaque dispositif de commande 30 comprend en outre un panneau de commande 38, fixé à la paroi latérale 14 à proximité du bord inférieur 24 du châssis de la fenêtre 16 associée. Le panneau de commande 38 est de préférence relié au boîtier de commande 32 correspondant par l'intermédiaire de câbles (non représentés) passant à l'intérieur de la paroi latérale 14.

Le panneau de commande 38, comportant de préférence des boutons ou une molette, permet à un passager de régler manuellement l'opacité du vitrage 20 de la fenêtre 16.

Selon un mode de réalisation, la voiture 10 comprend en outre un dispositif de ventilation/climatisation 40. Le système de fenêtre comprend alors, par exemple, une bouche de ventilation 42 associée audit dispositif de ventilation/climatisation. De préférence, chaque fenêtre 16 est alors disposée en regard d'une bouche de ventilation 42, comme représenté sur la figure 2.

De préférence, la bouche de ventilation 42 associée à une fenêtre 16 présente une forme allongée selon X. Ladite bouche de ventilation 42 est disposée dans l'espace interne 12 de la voiture 10, à distance selon Y de la paroi latérale 14. Ainsi, dans une première configuration de la bouche de ventilation 42, représentée sur la figure 2, ladite bouche de ventilation 42 et ladite paroi latérale 14 sont situés de part et d'autre d'un espace 44. Ledit espace 44 présente une forme allongée selon X et est situé au-dessus du bord supérieur 22 de la fenêtre 16 associée.

De préférence, le boîtier de commande 32 du dispositif de commande décrit ci-dessus est reçu dans ledit espace 44. Ainsi, le boîtier de commande 32 est sensiblement dissimulé à la vue des passagers de la voiture 10 par la bouche de ventilation 42.

De préférence, la bouche de ventilation 42 est reliée par une articulation 46 à une paroi interne de la voiture 10, solidaire de la paroi latérale 14. Ainsi, la bouche de ventilation 42 est apte à pivoter par rapport à la paroi latérale, entre la première configuration de la figure 2 et une deuxième configuration, dans laquelle ladite bouche de ventilation est écartée du boîtier de commande 32. Ladite deuxième configuration donne accès au boîtier de commande 32 pour des opérations de maintenance.

Dans le mode de réalisation représenté, la zone 26 à opacité variable forme l'ensemble du vitrage 20. Selon une variante non représentée, le vitrage 20 comporte en outre une ou plusieurs autres zones transparentes ou translucides, ou encore plusieurs zones distinctes à opacité variable réglables individuellement, comme décrit dans la demande de brevet FR 18 58433.

Il est possible de réaliser facilement une voiture 10 telle que décrite ci-dessus à partir d'une voiture existante, comprenant une fenêtre transparente et un panneau occultant de type store déroulant. A cet effet, la fenêtre transparente est remplacée par une fenêtre 16 à opacité variable ; de plus, l'enrouleur du store est déposé, son emplacement étant ensuite occupé par le boîtier de commande 32 associé à la fenêtre 16.

L'invention a été présenté dans le cas de son application à un véhicule ferroviaire mais le système de fenêtre est propre à être installé dans tout type de bâtiment ou véhicule.

## Revendications

1. Installation comprenant une paroi équipée d'au moins un système de fenêtre, ledit système de fenêtre comportant :
- une fenêtre (16) disposée dans ladite paroi, ladite fenêtre étant délimitée par des bords supérieur (22) et inférieur (24) sensiblement horizontaux et disposés l'un au-dessus de l'autre, la fenêtre étant pourvue d'un vitrage (20) à opacité variable ; et
- un dispositif de commande (30) de vitrage à opacité variable associé à la fenêtre, ledit dispositif de commande comprenant un boîtier de commande (32) ;
le boîtier de commande étant fixé à la paroi au-dessus du bord supérieur (22) de la fenêtre associée, une longueur (34) dudit boîtier de commande étant disposée sensiblement parallèlement audit bord supérieur,
des dimensions du boîtier de commande (32) perpendiculairement à sa longueur (34) étant inférieures à 10% de ladite longueur,
l'installation comprenant en outre une bouche de ventilation (42) associée à la fenêtre, ladite bouche de ventilation présentant une forme allongée s'étendant sensiblement dans une première direction horizontale (X) parallèle à la paroi,
de sorte que, dans une première configuration, ladite bouche de ventilation et ladite paroi définissent un espace (44) de forme allongée situé au-dessus du bord supérieur (22) de la fenêtre, ledit espace s'étendant dans une deuxième direction horizontale (Y) perpendiculaire à la première direction horizontale, le boîtier de commande (32) du dispositif de commande associé à ladite fenêtre étant reçu dans ledit espace.

2. Installation selon la revendication 1, dans laquelle le boîtier de commande présente une forme allongée.

3. Installation selon la revendication 1 ou la revendication 2, dans laquelle la bouche de ventilation (42) est propre à être montée mobile en rotation par rapport à la paroi, entre la première configuration et une deuxième configuration, ladite deuxième configuration donnant accès à l'espace (44) recevant le boîtier de commande.

4. Système de fenêtre pour la réalisation d'une installation selon la revendication 3, ledit système comportant :
- une fenêtre (16) propre à être disposée dans la paroi de l'installation, ladite fenêtre étant délimitée par des bords supérieur (22) et inférieur (24) sensiblement horizontaux et disposés l'un au-dessus de l'autre, la fenêtre étant pourvue d'un vitrage (20) à opacité variable ; et
- un dispositif de commande (30) de vitrage à opacité variable associé à la fenêtre, ledit dispositif de commande comprenant un boîtier de commande (32) ;
le boîtier de commande étant propre à être fixé à la paroi au-dessus du bord supérieur (22) de la fenêtre associée, une longueur (34) dudit boîtier de commande étant disposée sensiblement parallèlement audit bord supérieur,
des dimensions du boîtier de commande (32) perpendiculairement à sa longueur (34) étant inférieures à 10% de ladite longueur,
le système comprenant en outre une bouche de ventilation (42) associée à la fenêtre, ladite bouche de ventilation présentant une forme allongée destinée à s'étendre dans une première direction horizontale (X) parallèle à la paroi, de sorte que, dans une première configuration, ladite bouche de ventilation et ladite paroi définissent un espace (44) de forme allongée situé au-dessus du bord supérieur (22) de la fenêtre, ledit espace s'étendant dans une deuxième direction horizontale (Y) perpendiculaire à la première direction horizontale, le boîtier de commande (32) du dispositif de commande associé à ladite fenêtre étant propre à être reçu dans ledit espace,
dans lequel la bouche de ventilation (42) est propre à être montée mobile en rotation par rapport à la paroi, entre la première configuration et la deuxième configuration, ladite deuxième configuration donnant accès à l'espace (44) recevant le boîtier de commande.

5. Voiture (10) de véhicule, notamment ferroviaire, comportant au moins une installation comprenant une paroi latérale selon l'une des revendications 1 à 3.

6. Voiture de véhicule selon la revendication 5, dans lequel chaque paroi latérale comprend une pluralité de systèmes de fenêtre selon l'une quelconque des revendications précédentes, chaque fenêtre (16) étant disposée dans la paroi latérale (14),
chaque dispositif de commande comprenant un boîtier de commande (32), chaque boîtier de commande présentant une forme allongée et étant fixé à la paroi latérale au-dessus du bord supérieur (22) de la fenêtre associée, une longueur (34) dudit boîtier de commande étant disposée sensiblement parallèlement audit bord supérieur.

7. Véhicule, notamment ferroviaire, comprenant une pluralité de voitures (10) selon la revendication 5 ou 6.

8. Procédé de réalisation d'une voiture (10) selon l'une des revendications 5 à 7, à partir d'une voiture initiale comprenant une première fenêtre transparente et un panneau occultant de type store déroulant, ledit panneau occultant comprenant un enrouleur disposé au-dessus d'un bord supérieur de ladite première fenêtre transparente ; ledit procédé comprenant les étapes suivantes :
a) fourniture d'un système de fenêtre comportant :
- une deuxième fenêtre (16) propre à être disposée dans une paroi, ladite fenêtre étant délimitée par des bords supérieur (22) et inférieur (24) sensiblement horizontaux et disposés l'un au-dessus de l'autre, la deuxième fenêtre étant pourvue d'un vitrage (20) à opacité variable ;
- un dispositif de commande (30) de vitrage à opacité variable associé à la deuxième fenêtre, ledit dispositif de commande comprenant un boîtier de commande (32) ;
le boîtier de commande étant propre à être fixé à la paroi au-dessus du bord supérieur (22) de la deuxième fenêtre associée, une longueur (34) dudit boîtier de commande étant disposée sensiblement parallèlement audit bord supérieur,
des dimensions du boîtier de commande (32) perpendiculairement à sa longueur (34) étant inférieures à 10% de ladite longueur ; et
- une bouche de ventilation (42) associée à la deuxième fenêtre, ladite bouche de ventilation présentant une forme allongée destinée à s'étendre sensiblement parallèlement à la paroi,
de sorte que, dans une première configuration, ladite bouche de ventilation et ladite paroi définissent un espace (44) de forme allongée situé au-dessus du bord supérieur (22) de la deuxième fenêtre, le boîtier de commande (32) du dispositif de commande associé à ladite fenêtre étant propre à être reçu dans ledit espace ;
b) remplacement de la première fenêtre transparente de la voiture initiale par la fenêtre (16) à opacité variable ;
c) dépose de l'enrouleur, de sorte à libérer un emplacement au-dessus du bord supérieur de la deuxième fenêtre ; et
d) installation du boîtier de commande (32) dans ledit emplacement.

## Patentansprüche

1. Anlage mit einer Wand, die mit mindestens einem Fenstersystem ausgestattet ist, wobei das Fenstersystem umfasst:
- ein Fenster (16), das in der Wand angeordnet ist, wobei das Fenster durch einen oberen (22) und einen unteren (24) Rand begrenzt wird, die im Wesentlichen horizontal und übereinander angeordnet sind, wobei das Fenster mit einer Verglasung (20) mit variabler Opazität versehen ist; und
- eine Steuervorrichtung (30) für eine mit dem Fenster verbundene Verglasung mit variabler Opazität, wobei die Steuervorrichtung ein Steuergehäuse (32) umfasst;
das Steuergehäuse an der Wand oberhalb der oberen Kante (22) des zugehörigen Fensters befestigt ist, wobei eine Länge (34) des Steuergehäuses im Wesentlichen parallel zu der oberen Kante angeordnet ist,
Abmessungen des Steuergehäuses (32) senkrecht zu seiner Länge (34) weniger als 10% dieser Länge betragen,
die Anlage außerdem eine dem Fenster zugeordnete Lüftungsöffnung (42) umfasst, wobei die Lüftungsöffnung eine längliche Form aufweist, die sich im Wesentlichen in einer ersten horizontalen Richtung (X) parallel zur Wand erstreckt,
so dass in einer ersten Konfiguration die Lüftungsöffnung und die Wand einen länglichen Raum (44) definieren, der sich über der oberen Kante (22) des Fensters befindet, wobei der Raum sich in einer zweiten horizontalen Richtung (Y) senkrecht zur ersten horizontalen Richtung erstreckt, wobei das Steuergehäuse (32) der mit dem Fenster verbundenen Steuervorrichtung in dem Raum aufgenommen wird.

2. Anlage nach Anspruch 1, bei der das Steuergehäuse eine längliche Form hat.

3. Anlage nach Anspruch 1 oder 2, bei der die Lüftungsöffnung (42) dazu geeignet ist, zwischen der ersten Konfiguration und einer zweiten Konfiguration drehbar in Bezug auf die Wand montiert zu werden, wobei die zweite Konfiguration Zugang zu dem Raum (44) bietet, der die Steuereinheit aufnimmt.

4. Fenstersystem zur Herstellung einer Anlage nach Anspruch 3, wobei das System umfasst:
- ein Fenster (16), das in der Wand der Anlage angeordnet werden kann, wobei das Fenster von einem oberen (22) und einem unteren (24) Rand begrenzt wird, die beide im Wesentlichen horizontal und übereinander angeordnet sind, wobei das Fenster mit einer Verglasung (20) mit variabler Opazität versehen ist; und
- eine Steuervorrichtung (30) für eine mit dem Fenster verbundene Verglasung mit variabler Opazität, wobei die Steuervorrichtung ein Steuergehäuse (32) umfasst;
wobei das Steuergehäuse geeignet ist, an der Wand oberhalb der oberen Kante (22) des zugehörigen Fensters befestigt zu werden, wobei eine Länge (34) des Steuergehäuses im Wesentlichen parallel zu der oberen Kante angeordnet ist,
Abmessungen des Steuergehäuses (32) senkrecht zu seiner Länge (34) weniger als 10% dieser Länge betragen,
wobei das System weiterhin eine Lüftungsöffnung (42) umfasst, die mit dem Fenster verbunden ist, wobei die Lüftungsöffnung eine längliche Form hat, um sich in einer ersten horizontalen Richtung (X) parallel zu der Wand zu erstrecken, so dass in einer ersten Konfiguration die Lüftungsöffnung und die Wand einen länglichen Raum (44) bilden, der sich über der oberen Kante (22) des Fensters befindet, wobei sich der Raum in einer zweiten horizontalen Richtung (Y) senkrecht zur ersten horizontalen Richtung erstreckt, wobei das Steuergehäuse (32) der mit dem Fenster verbundenen Steuervorrichtung in dem Raum aufgenommen werden kann,
wobei die Lüftungsöffnung (42) dazu geeignet ist, drehbar in Bezug auf die Wand zwischen der ersten Konfiguration und der zweiten Konfiguration montiert zu werden, wobei die zweite Konfiguration Zugang zu dem Raum (44) gewährt, der das Steuergehäuse aufnimmt.

5. Wagen (10) eines Fahrzeugs, insbesondere eines Schienenfahrzeugs, mit mindestens einer Einrichtung, die eine Seitenwand nach einem der Ansprüche 1 bis 3 umfasst.

6. Wagen eines Fahrzeugs nach Anspruch 5, wobei jede Seitenwand eine Vielzahl von Fenstersystemen nach einem der vorhergehenden Ansprüche umfasst, wobei jedes Fenster (16) in der Seitenwand (14) angeordnet ist,
jede Steuervorrichtung ein Steuergehäuse (32) umfasst, wobei jedes Steuergehäuse eine längliche Form hat und an der Seitenwand der oberen Kante (22) des zugehörigen Fensters befestigt ist, wobei eine Länge (34) des Steuergehäuses im Wesentlichen parallel zu der oberen Kante angeordnet ist.

7. Fahrzeug, insbesondere Schienenfahrzeug, umfassend eine Vielzahl von Wagen (10) nach Anspruch 5 oder 6.

8. Verfahren zur Herstellung eines Wagens (10) nach einem der Ansprüche 5 bis 7, ausgehend von einem Ausgangswagen, der ein erstes transparentes Fenster und ein Verdunkelungspaneel vom Typ Rollo umfasst, wobei das Verdunkelungspaneel eine Aufrollvorrichtung umfasst, die über einer Oberkante des ersten transparenten Fensters angeordnet ist; wobei das Verfahren die folgenden Schritte umfasst:
a) Bereitstellung eines Fenstersystems mit:
- einem zweiten Fenster (16), das in einer Wand angeordnet werden kann, wobei das Fenster durch einen oberen (22) und einen unteren (24) Rand begrenzt ist, die im Wesentlichen horizontal und übereinander angeordnet sind, wobei das zweite Fenster mit einer Verglasung (20) mit variabler Opazität versehen ist;
- eine Steuervorrichtung (30) für eine dem zweiten Fenster zugeordnete Verglasung mit variabler Opazität, wobei die Steuervorrichtung ein Steuergehäuse (32) umfasst;
wobei das Steuergehäuse geeignet ist, an der Wand oberhalb der oberen Kante (22) des zugehörigen zweiten Fensters befestigt zu werden, wobei eine Länge (34) des Steuergehäuses im Wesentlichen parallel zu der oberen Kante angeordnet ist,
Abmessungen des Steuergehäuses (32) senkrecht zu seiner Länge (34) weniger als 10% dieser Länge betragen; und
- eine Lüftungsöffnung (42), die mit dem zweiten Fenster verbunden ist, wobei die Lüftungsöffnung eine längliche Form hat, die sich im Wesentlichen parallel zur Wand erstrecken soll,
so dass in einer ersten Konfiguration die Lüftungsöffnung und die Wand einen länglichen Raum (44) definieren, der sich oberhalb der oberen Kante (22) des zweiten Fensters befindet, wobei das Steuergehäuse (32) der mit dem Fenster verbundenen Steuervorrichtung in dem Raum aufgenommen werden kann;
b) Ersetzen des ersten transparenten Fensters des ursprünglichen Wagens durch das Fenster (16) mit variabler Opazität;
c) Absetzen des Aufrollers, so dass ein Platz oberhalb der Oberkante des zweiten Fensters frei wird; und
d) Installation der Steuereinheit (32) in dem genannten Ort.

## Claims

1. Installation comprising a wall equipped with at least one window system, said window system comprising:
- a window (16) disposed in said wall, said window being delimited by substantially horizontal upper (22) and lower (24) edges disposed one above the other, the window being provided with variable opacity glazing (20); and
- a control device (30) for variable opacity glazing associated with the window,
said control device comprising a control box (32);
the control box being secured to the wall above the top edge (22) of the associated window, a length (34) of said control box being disposed substantially parallel to said top edge,
dimensions of the control box (32) perpendicular to its length (34) being less than 10% of said length,
the installation further comprising a ventilation vent (42) associated with the window, said ventilation vent having an elongate shape extending substantially in a first horizontal direction (X) parallel to the wall,
so that, in a first configuration, said ventilation opening and said wall define a space (44) of elongated shape located above the upper edge (22) of the window, said space extending in a second horizontal direction (Y) perpendicular to the first horizontal direction, the control box (32) of the control device associated with said window being received in said space.

2. Installation according to claim 1, in which the control box has an elongated shape.

3. Installation according to claim 1 or claim 2, in which the ventilation opening (42) is suitable for being mounted so as to be able to move in rotation with respect to the wall, between the first configuration and a second configuration, the said second configuration giving access to the space (44) accommodating the control box.

4. A window system for making an installation according to claim 3, said system comprising:
- a window (16) adapted to be disposed in the wall of the installation, said window being delimited by substantially horizontal upper (22) and lower (24) edges disposed one above the other, the window (20) being provided with variable opacity glazing; and
- a control device (30) for variable opacity glazing associated with the window,
said control device comprising a control box (32);
the control box being adapted to be secured to the wall above the top edge (22) of the associated window, a length (34) of said control box being disposed substantially parallel to said top edge,
dimensions of the control box (32) perpendicular to its length (34) being less than 10% of said length,
the system further comprising a ventilation aperture (42) associated with the window, said ventilation aperture having an elongate shape intended to extend in a first horizontal direction (X) parallel to the wall, so that, in a first configuration, said ventilation aperture and said wall define a space (44) of elongated shape located above the upper edge (22) of the window, said space extending in a second horizontal direction (Y) perpendicular to the first horizontal direction the first horizontal direction, the control box (32) of the control device associated with said window being adapted to be received in said space,
in which the ventilation opening (42) is suitable for being mounted so as to be rotatable relative to the wall, between the first configuration and the second configuration, said second configuration giving access to the space (44) receiving the control box.

5. A vehicle carriage (10), in particular for a railway vehicle, comprising at least one installation including a side wall according to one of claims 1 to 3.

6. A vehicle carriage according to claim 5, wherein each side wall comprises a plurality of window systems according to any of the preceding claims, each window (16) being disposed in the side wall (14),
each control device comprising a control housing (32), each control housing having an elongate shape and being secured to the side wall above the top edge (22) of the associated window, a length (34) of said control housing being disposed substantially parallel to said top edge.

7. A railway vehicle comprising at least one wheel (10) according to claim 5 to 6.

8. A method for producing a car (10) according to one of claims 5 to 7, starting from an initial car comprising a first transparent window and a blackout panel of the roller blind type, said blackout panel comprising a roller disposed above an upper edge of said first transparent window; said method comprising the following steps:
a) supply of a window system comprising:
- a second window (16) suitable for being disposed in a wall, said window being delimited by substantially horizontal upper (22) and lower (24) edges disposed one above the other, the second window being provided with variable opacity glazing (20);
- a control device (30) for variable-opacity glazing associated with the second window, said control device comprising a control box (32);
the control box being adapted to be secured to the wall above the top edge (22) of the associated second window, a length (34) of said control box being disposed substantially parallel to said top edge,
dimensions of the control box (32) perpendicular to its length (34) being less than 10% of said length; and
- a ventilation aperture (42) associated with the second window, said ventilation aperture having an elongated shape designed to extend substantially parallel to the wall,
so that, in a first configuration, said vent and said wall define a space (44) of elongated shape located above the upper edge (22) of the second window, the control box (32) of the control device associated with said window being adapted to be received in said space;
b) replacement of the first transparent window of the initial car by the variable opacity window (16);
c) removal of the winder, so as to free up a space above the top edge of the second window; and
d) installation of the control box (32) in the said location.
